(19) Europäisches Patentamt
European Patent Office
Office européen des brevets

(11) **EP 3 360 627 B1**

(12) # EUROPÄISCHE PATENTSCHRIFT

(45) Veröffentlichungstag und Bekanntmachung des Hinweises auf die Patenterteilung:
**05.01.2022 Patentblatt 2022/01**

(21) Anmeldenummer: **17155228.4**

(22) Anmeldetag: **08.02.2017**

(51) Int Cl.:
*B22F 3/105* [(2006.01)]   *B29C 64/153* [(2017.01)]
*B22F 1/00* [(2006.01)]   *B33Y 70/00* [(2020.01)]
*C04B 35/01* [(2006.01)]   *C04B 35/111* [(2006.01)]
*C04B 35/653* [(2006.01)]   *B22F 10/28* [(2021.01)]
*B22F 9/00* [(2006.01)]   *B33Y 10/00* [(2015.01)]

(54) **PULVER ZUR VERWENDUNG IN EINEM ADDITIVEN FERTIGUNGSVERFAHREN**

POWDER FOR USE IN AN ADDITIVE MANUFACTURING METHOD

POUDRE À UTILISER DANS UN PROCÉDÉ DE FABRICATION ADDITIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.08.2018 Patentblatt 2018/33**

(73) Patentinhaber: **Heraeus Deutschland GmbH & Co. KG**
**63450 Hanau (DE)**

(72) Erfinder:
• **PROTZMANN, Tim**
**63607 Wächtersbah (DE)**
• **KUNZ, Martin**
**76337 Waldbronn (DE)**
• **ELSEN, Alexander**
**63456 Hanau (DE)**

(74) Vertreter: **Heraeus IP**
**Heraeus Holding GmbH**
**Intellectual Property**
**Heraeusstraße 12-14**
**63450 Hanau (DE)**

(56) Entgegenhaltungen:
• **CHOI JOON-PHIL ET AL: "Densification and microstructural investigation of Inconel 718 parts fabricated by selective laser melting", POWDER TECHNOLOGY, ELSEVIER SEQUOIA, LAUSANNE, CH, Bd. 310, 7. Januar 2017 (2017-01-07), Seiten 60-66, XP029919028, ISSN: 0032-5910, DOI: 10.1016/J.POWTEC.2017.01.030**
• **SUN Y Y ET AL: "Manipulation and Characterization of a Novel Titanium Powder Precursor for Additive Manufacturing Applications", JOM: JOURNAL OF METALS, SPRINGER NEW YORK LLC, UNITED STATES, Bd. 67, Nr. 3, 4. Februar 2015 (2015-02-04), Seiten 564-572, XP035455815, ISSN: 1047-4838, DOI: 10.1007/S11837-015-1301-3 [gefunden am 2015-02-04]**
• **FISCHER P ET AL: "Selective laser sintering of amorphous metal powder", APPLIED PHYSICS A MATERIALS SCIENCE & PROCESSING, SPRINGER BERLIN HEIDELBERG, BERLIN/HEIDELBERG, Bd. 80, Nr. 3, 1. Februar 2005 (2005-02-01), Seiten 489-492, XP036005835, ISSN: 0947-8396, DOI: 10.1007/S00339-004-3062-7 [gefunden am 2005-02-01]**
• **HAN QUANQUAN ET AL: "Characterisation and milling time optimisation of nanocrystalline aluminium powder for selective laser melting", THE INTERNATIONAL JOURNAL OF ADVANCED MANUFACTURING TECHNOLOGY, SPRINGER, LONDON, Bd. 88, Nr. 5, 14. Mai 2016 (2016-05-14), Seiten 1429-1438, XP036143572, ISSN: 0268-3768, DOI: 10.1007/S00170-016-8866-Z [gefunden am 2016-05-14]**

Bemerkungen:
Die Akte enthält technische Angaben, die nach dem Eingang der Anmeldung eingereicht wurden und die nicht in dieser Patentschrift enthalten sind.

**Beschreibung**

Additive Fertigungsverfahren sind im Begriff, bestehende Produktionsprozesse zu revolutionieren. Über additive Fertigungsverfahren lassen sich Bauteile mit komplexer dreidimensionaler Geometrie direkt herstellen. Die additive Fertigung bezeichnet einen Prozess, bei dem auf der Basis von digitalen 3D-Konstruktionsdaten durch schichtweises Ablagern von Material, ein Bauteil aufgebaut wird.

Ein Variante der additiven Fertigungsverfahren sind Pulverbett-basierte Verfahren. Bei diesen Pulverbett-basierten additiven Fertigungsverfahren wird zunächst eine dünne Schicht eines Pulvers auf eine Bauplattform aufgetragen. Über einen ausreichend hohen Energieeintrag mittels energiereicher Strahlung, beispielsweise über Laser- oder Elektronenstrahlung, wird das Pulver an den Stellen, die die Computer-generierten Konstruktionsdaten vorgeben, zumindest teilweise aufgeschmolzen oder gesintert. Anschließend kühlt die selektiv bestrahlte Stelle der Pulverschicht ab und härtet aus. Danach wird die Bauplattform abgesenkt und es erfolgt ein weiterer Pulverauftrag. Die weitere Pulverschicht wird erneut zumindest teilweise aufgeschmolzen oder über die Sintertemperatur erhitzt und verbindet sich an den selektiv erhitzten Stellen mit der darunterliegenden Schicht. Diese Schritte werden mit so vielen aufeinanderfolgenden Schichten wiederholt, bis das Bauteil in seiner finalen Form vorliegt.

Insbesondere bei der Zahl der mittels additiver Fertigung verarbeitbaren Materialen wurden in den vergangen Jahren große Fortschritte erzielt. So ist es heute möglich, nicht nur Kunststoffe zu verdrucken, sondern auch hochschmelzende Materialien wie, z.B. Metalle oder Keramiken.

Ziel additiver Fertigungsverfahren ist es insbesondere, Bauteile mit komplexen Geometrien herzustellen, die vergleichbare oder sogar bessere Materialeigenschaften aufweisen als die mit bekannten subtraktiven Verfahren (z.B. CNC-Fräsen) erhältlichen Bauteile. So hängt zum Beispiel die Zugfestigkeit eines Bauteils direkt mit der Porosität zusammen. Je kompakter das Material gedruckt werden kann, umso höher ist die Zugfestigkeit des fertigen Bauteils. Weitere relevante Eigenschaften des fertigen Bauteils sind beispielsweise eine hohe Kantenschärfe und eine möglichst geringe Oberflächenrauheit.

Um mechanisch möglichst stabile Bauteile zu erhalten, ist ein dichtes Pulverbett wünschenswert. Um dies zu erreichen, ist es bevorzugt, wenn die Schüttdichte der Pulverschicht, mindestens 50%, insbesondere mindestens 60% beträgt. Auf der anderen Seite ist es für Pulverbett-basierte Verfahren vorteilhaft, wenn die dynamischen Eigenschaften, des Pulvers, wie z.B. die Fließfähigkeit so eingestellt sind, dass sich das Pulver mittels Rakeln aufbringen lässt.

In der Praxis zeigt sich, dass eine gleichzeitige Optimierung der Pulvereigenschaften für den Pulverauftrag und für den eigentlichen Fertigungsschritt sehr schwierig ist. Häufig wird eine Verbesserung einer bestimmten Eigenschaft (z.B. Fließfähigkeit) auf Kosten einer der anderen Eigenschaften (wie z.B. Dichte im fertigen Bauteil) erzielt. Bisher ist es jedoch nicht möglich, anhand einer Messgröße vorherzusagen, ob ein Pulver zu dichten Bauteilen mit geringer Porosität verarbeitet werden kann. Vielmehr war es bisher erforderlich gewesen, mit jedem potentiell geeigneten Pulver aufwändige Druckversuche durchzuführen, um im Nachhinein die Materialeigenschaften des gedruckten Bauteils zu beurteilen.

Aus Choi Joon-Phil et al: "Densification and microstructural investigation of Inconel 718 parts fabricated by selective laser melting", Powder Technology, Bd. 310, 2017, Seiten 60-66 sind Inconel-Pulver bekannt, die mittels selektivem Laserschmelzen (SLM) verarbeitet wurden.

Sun Y Y et al: "Manipulation and Characterization of a Novel Titanium Powder Precursor for Additive Manufacturing Applications", Journal of Metals, Bd. 67, Nr. 3, 2015, Seiten 564-572 beschreiben ein neuartiges und kostengünstiges Ti-Schwamm-Material als Vorläufer für Titanpulver sowie deren Verwendung in einem speziellen Pulverbehandlungsverfahren.

Eine Aufgabe der vorliegenden Erfindung besteht darin, Pulver bereitzustellen, aus denen durch additive Fertigung komplexe Bauteile hoher relativer Dichte (d.h. niedriger Porosität) hergestellt werden können. Die aus dem Pulver herstellbaren Bauteile sollten optional außerdem eine möglichst hohe Kantenschärfe und/oder eine möglichst geringe Oberflächenrauheit aufweisen.

Die Aufgaben der vorliegenden Erfindung werden gelöst durch den unabhängigen Anspruch 1. Überraschenderweise wurde gefunden, dass Pulver besonders gut für die additive Fertigung mittels selektivem Schmelzen und/oder Sintern von aufeinander folgenden Pulverschichten geeignet sind, wenn die Pulver folgende Merkmale aufweisen:
Einen $d_2$ - Wert von 10 $\mu$m oder mehr, einen $d_{90}$ - Wert von 200 $\mu$m oder weniger und einen Quotienten Q mit einem Wert von 0,8 kJ/(kg*$\mu$m) oder weniger, wobei Q der Quotient aus Lawinenenergie $E_{Law}$ geteilt durch den mittleren Partikeldurchmesser $d_{50}$ ist (Q = $E_{Law}/d_{50}$).

Durch die Angabe der Parameter des erfindungsgemäßen Pulvers kann eine verlässliche Aussage über die Eignung eines Pulvers für die Verwendung in einem additiven Fertigungsverfahren getroffen werden. Aufwendige Testdrucke mit anschließender mechanischer Prüfung können entfallen, was eine enorme Erleichterung darstellt.

Das Pulver der vorliegenden Erfindung ist bevorzugt ausgewählt aus einem sinterbaren und/oder schmelzbaren Material. Als sinterbare und/oder schmelzbare Materialien sind im Rahmen der Erfindung solche zu verstehen, die sich bei den verwendeten Bedingungen in einem additiven Fertigungsverfahren nicht thermisch zersetzen. Das Pulver besteht erfindungsgemäß aus einzelnen Partikeln. Die Pulver weisen eine Partikelgrößenverteilung auf.

Die Partikel des Pulvers bestehen vorzugsweise aus einem bei Raumtemperatur und Atmosphärendruck festen Material. Das Material weist in einer bevorzugten Ausführungsform eine Schmelztemperatur unterhalb der Zersetzungstemperatur auf. Optional kann das Material eine Glasübergangstemperatur aufweisen. Die Schmelztemperatur bzw. falls vorhanden die Glasübergangstemperatur des Materials liegen bevorzugt oberhalb von 100°C, insbesondere oberhalb von 300°C. Die Glasübergangstemperatur kann beispielsweise mittels der dynamischmechanischen Analyse oder der dynamischen Differenzkalorimetrie (DSC) bestimmt werden. Das Pulver weist mindestens ein Material auf, das ausgewählt ist aus der Gruppe bestehend aus Metallen, Keramiken, Gläsern und Glaskeramiken. In einer bevorzugten Ausführungsform besteht das Pulver aus einem der vorgenannten Materialien. In einer bevorzugten Ausführungsform kann das Pulver auch eine Mischung von Pulvern aus unterschiedlichen Materialien sein.

Unter "Metallen" sind vorliegend sowohl reine Metalle als auch Metalllegierungen zu verstehen.

In dem erfindungsgemäßen Pulver kann als Metall ein reines Metall, mehrere Arten von reinen Metallen, eine Art von Metalllegierung, mehrere Arten von Metalllegierungen oder Mischungen davon enthalten sein.

Im Rahmen der Erfindung bezieht sich der Begriff "reines Metall" auf ein elementar vorliegendes chemisches Element, das im Periodensystem der Elemente in derselben Periode wie Bor, aber links von Bor, in derselben Periode wie Silizium, aber links von Silizium, in derselben Periode wie Germanium, aber links von Germanium, und in derselben Periode wie Antimon, aber links von Antimon steht, sowie auf alle Elemente, die eine höhere Ordnungszahl als 55 aufweisen.

Der Begriff "reine Metalle" schließt nicht aus, dass das Metall Verunreinigungen aufweist. Bevorzugt beträgt die Gesamtmenge an Verunreinigungen nicht mehr als 1 Gewichtsprozent, insbesondere nicht mehr als 0,1 Gewichtsprozent und ganz besonders bevorzugt nicht mehr als 0,01 Gewichtsprozent, bezogen auf die Gesamtmenge an reinem Metall. In einer besonders bevorzugten Ausführungsform enthält das reine Metall keine absichtlich hinzugefügten Elemente.

In einer bevorzugten Ausführungsform kann das reine Metall ein Edelmetall sein. In einer besonders bevorzugten Ausführungsform ist das Edelmetall ein Platinmetall, Gold oder Silber. Das Platinmetall kann ausgewählt sein aus der Gruppe bestehend aus Platin, Iridium, Palladium, Ruthenium, Rhodium und Osmium.

In einer anderen bevorzugten Ausführungsform kann das reine Metall ein Refraktärmetall sein. Das Refraktärmetall kann ausgewählt sein aus Elementen der 4. Nebengruppe (z.B. Titan, Zirconium und Hafnium), der 5. Nebengruppe (z.B. Vanadium, Niob und Tantal) sowie der 6. Nebengruppe (z.B. Chrom, Molybdän und Wolfram).

In einer weiteren bevorzugten Ausführungsform kann das reine Metall ein Buntmetall oder Eisen sein. Das Buntmetall kann ausgewählt sein aus der Gruppe bestehend aus Cadmium, Kobalt, Kupfer, Nickel, Blei, Zinn und Zink.

Das Metall kann gemäß einer Ausführungsform eine Metalllegierung sein. Als Metalllegierungen werden erfindungsgemäß metallische Gemische aus wenigstens zwei Elementen verstanden, von denen wenigstens eins ein Metall ist. "Metallisch" meint in diesem Zusammenhang, dass unter den beteiligten Elementen eine metallische Bindung vorliegt.

In einer bevorzugten Ausführungsform kann die Metalllegierung eine Edelmetalllegierung sein. In einer besonders bevorzugten Ausführungsform enthält die Edelmetalllegierung ein Element ausgewählt aus der Gruppe bestehend aus Platinmetallen, Gold und Silber.

Bevorzugte Platinmetalle in den Edelmetalllegierungen können ausgewählt sein aus der Gruppe bestehend aus Platin, Iridium, Palladium, Ruthenium, Rhodium und Osmium. In einer weiteren bevorzugten Ausführungsform kann die Edelmetalllegierung eine Legierung aus mindestens zwei dieser Platinmetalle sein (z.B. Platin-Iridium- oder Platin-Rhodium-Legierungen).

Die Metalllegierung kann bevorzugt Elemente enthalten, die ausgewählt sind aus Refraktärmetallen, Buntmetallen, Eisen sowie Kombinationen aus mindestens zwei dieser Metalle.

Besonders bevorzugte Metalllegierungen können außerdem ausgewählt sein aus Aluminiumlegierungen, Nickelbasislegierungen, Cobaltbasislegierungen, Titan-Aluminium-Legierungen, Kupfer-Zinn-Legierungen, Edelstahllegierungen, Werkzeugstahllegierungen und Superlegierungen für Hochtemperaturanwendungen.

In einer besonders bevorzugten Ausführungsform kann die Metalllegierung ein amorphes Metall sein. Unter amorphen Metallen sind Legierungen zu verstehen, die metallischen Bindungscharakter und gleichzeitig eine amorphe, also nicht-kristalline, Phase aufweisen. Amorphe Metalle können besondere Eigenschaften aufweisen, da sie auf der einen Seite häufig sehr hart sind, aber auf der anderen Seite plastisch formbar (duktil) und hoch elastisch sein können. Die amorphen Metalle können ausgewählt sein aus der Gruppe bestehend aus Titan-, Zirkon-, Eisen-, Nickel-, Cobalt-, Palladium-, Platin-, Kupfer-, Gold-, Magnesium-, Calcium- und Aluminium- basierten Legierungen. "Basiert" meint in diesem Zusammenhang, dass das jeweils genannte Element auf das Gewicht der Legierung bezogen den größten Anteil darstellt. Besonders bevorzugte Beispiele für Legierungen, die amorphe Metalle bilden, sind ausgewählt aus der Gruppe bestehend aus NiNbSn, CoFeTaB, CaMgAgCu, CoFeBSiNb, FeGa(Cr,Mo)(P,C,B), TiNi-CuSn, FeCoLnB, Co(Al,Ga)(P,B,Si), FeBSiNb, Ni(Nb,Ta)ZrTi. Insbesondere kann das amorphe Metall eine ZrCuAlNb-Legierung sein. Bevorzugt weist diese ZrCuAlNb-Legierung außer Zirkon zusätzlich 23,5 - 24,5% Gew. % Kupfer, 3,5 - 4,0 Gew. % Aluminium sowie 1,5 - 2,0 Gew. % Niob auf (kommerziell erhältliche als AMZ4® von Heraeus Deutschland GmbH).

Geeignete Verfahren für die Herstellung von Metallpulvern sind dem Fachmann prinzipiell bekannt. Bevorzugt erfolgt die Herstellung des Pulvers aus Metallpartikeln durch ein Verdüsungsverfahren, insbesondere durch eine Plasmaverdüsung, eine Zentrifugalverdüsung oder eine tiegellose Verdüsung.

Das Material des erfindungsgemäßen Pulvers kann in einer Ausführungsform eine Keramik sein. Unter Keramiken sind im Kontext der Erfindung kristalline anorganische Materialien zu verstehen, die keinen metallischen Charakter aufweisen. In einer bevorzugten Ausführungsform kann die Keramik natürliche Mineralien umfassen. Die Keramik kann ausgewählt sein aus der Gruppe bestehend aus Oxidkeramiken, Nitridkeramiken, Carbidkeramiken sowie Mischformen von mindestens zwei dieser Keramiken.

Die Oxidkeramiken können bevorzugt Oxide der Elemente aufweisen, die ausgewählt sind aus der Gruppe bestehend aus Magnesium, Calcium, Aluminium, Silizium, Titan, Zirkon und Zink. Die Oxidkeramik kann reine Elementoxide oder Mischoxide umfassen. In einer bevorzugten Ausführungsform sind die Elementoxide ausgewählt aus der Gruppe bestehend aus Magnesiumoxid, Calciumoxid, Aluminiumoxid, Siliziumoxid, Titanoxid, Zirkonoxid und Zinkoxid. In einer anderen bevorzugten Ausführungsform enthalten die Mischoxide mindestens zwei der Elemente die ausgewählt sind aus der Gruppe bestehend aus Magnesium, Calcium, Aluminium, Silizium, Titan, Zirkon und Zink. Optional können die Mischoxide weitere Elemente enthalten, die ausgewählt sind aus der Gruppe bestehend aus den Elementen der 3. bis 6. Hauptgruppe des Periodensystems der Elemente. Keramikpulver unterschiedlicher Form und Größe können durch dem Fachmann bekannten Verfahren hergestellt werden, z.B. durch Mahlen.

Das Material des erfindungsgemäßen Pulvers kann in einer Ausführungsform ein Glas sein. Unter einem Glas ist im Rahmen der Erfindung ein anorganisches amorphes Material zu verstehen, das keinen metallischen Bindungscharakter aufweist. Die Gläser können oxidische Gläser sein. Oxidische Gläser können ausgewählt sein aus der Gruppe bestehend aus Silikatgläsern, Boratgläser, Phosphatgläsern. Die Bezeichnung dieser bevorzugten oxidischen Gläser gibt jeweils an, welche Komponente, auf das Gewicht bezogen, am häufigsten vorkommt. Zum Beispiel ist Silikat ($SiO_4^{4-}$) die häufigste Komponente in Silikatgläsern. Jede der genannten Arten von Gläsern kann weitere Elemente als Oxide enthalten, wobei diese weiteren Elemente beispielsweise ausgewählt sein können aus Alkalimetallen, Erdalkalimetallen, Aluminium, Bor, Blei, Zink und Titan.

Die Glaspulver können nach dem Fachmann bekannten Verfahren, beispielsweise durch Mahlen oder chemische Synthesen (z.B. Fällung, Sol-Gel-Verfahren), hergestellt werden.

In einer Ausführungsform kann das Pulver eine Glaskeramik enthalten. Glaskeramiken sind anorganische Materialien, die keinen metallischen Charakter aufweisen und sowohl eine amorphe als auch eine kristalline Phase aufweisen.

Bevorzugt genügen mindestens 80% der Partikel der folgenden Bedingung:

$$0{,}8 \le d_{min}/d_{max} \le 1{,}0;$$

wobei $d_{min}$ der minimale Durchmesser und $d_{max}$ der maximale Durchmesser eines Partikels sind. Wenn im Zusammenhang mit den erfindungsgemäßen Pulvern auf die Parameter $d_2$, $d_{50}$ und $d_{90}$ Bezug genommen wird, können diese wie folgt bestimmt werden. Das jeweilige Pulver kann als Trockendispersion mittels Laserbeugungs-Partikelgrößenanalyse gemäß der ISO 13320:2009 vermessen werden und aus den Messdaten kann die Volumenverteilungssummenkurve bestimmt werden. Aus der Volumenverteilungskurve lassen sich gemäß ISO 9276-2:2014, die Werte $d_2$, $d_{50}$ und $d_{90}$ errechnen. Hierbei bedeutet zum Beispiel "$d_2$", dass 2 Vol. % der Partikel einen Durchmesser unterhalb dieses Wertes aufweisen.

Das erfindungsgemäße Pulver weist einen $d_2$ - Wert von 10 μm oder mehr, insbesondere 20 μm oder mehr und ganz besonders bevorzugt 30 μm oder mehr auf. Außerdem weist das erfindungsgemäße Pulver einen $d_{90}$-Wert von 200 μm oder weniger, bevorzugt 150 μm oder weniger, insbesondere 100 μm oder weniger und ganz besonders bevorzugt 65 μm oder weniger auf. Typische Pulver weisen zum Beispiel Partikelgrößenverteilungen im Bereich von 10 - 32 μm 10 - 45 μm, 20 - 63 μm, 45 - 100 μm, 45 - 150 μm auf. Hierbei beziehen sich der Wert vor dem Bindestrich jeweils auf den $d_2$- Wert und der Wert nach dem Bindestrich auf den $d_{90}$ - Wert.

Das erfindungsgemäße Pulver weist weiterhin einen Quotienten Q mit einem Wert von 0,8 kJ/(kg*μm) oder weniger auf, wobei Q der Quotient aus Lawinenenergie $E_{Law}$ und mittlerem Partikeldurchmesser $d_{50}$ ist ($Q = E_{Law}/d_{50}$). In einer bevorzugten Ausführung weist der Quotienten Q einen Wert von 0,65 kJ*μm/kg oder weniger auf, insbesondere einen Wert von 0,5 kJ*μm/kg oder weniger. Die Lawinenenergie $E_{Law}$ kann im Rahmen der vorliegenden Erfindung durch Rotations-Pulver-Analyse bestimmt werden. Das Verfahren der Rotations-Pulver-Analyse ist im Absatz "Messmethoden" beschrieben.

Das Pulver der vorliegenden Erfindung kann mit einem Verfahren aufgefunden werden, das durch die folgende Schrittfolge gekennzeichnet ist:

a. Bereitstellen eines Pulvers aus einem schmelzbaren und/oder sinterbaren Material,

b. Klassieren des Pulvers, sodass die Partikelgrößenverteilung die Bedingungen $d_2 \geq 10\ \mu m$ und $d_{90} \leq 200\ \mu m$ erfüllt,

c. Bestimmen der Fließfähigkeit mittels Rotations-Pulver-Analyse und Bestimmen des $d_{50}$-Werts mittels Laserbeugungsanalyse gemäß ISO 13320:2009,

d. Berechnen des Quotienten $E_{Law}/d_{50}$,

e. Auswählen von Pulvern mit einer Quotienten $E_{Law}/d_{50}$ von nicht mehr als 0,80 kJ/(kg*$\mu$m).

Mithilfe des angegebenen Verfahrens ist es möglich, Pulver ausfindig zu machen, die in einem additiven Fertigungsverfahren, insbesondere in einem Pulverbett-basierten Verfahren, wie z.B. selektivem Laserschmelzen, verwendet werden könne.

In Schritt b) wird das Pulver mindestens einem Klassierungsverfahren unterzogen. Bevorzugte Klassierungsverfahren sind Sieben und Sichten. Das Sieben kann z.B. mittels Taumelsieb, Rotationssieb oder Vibrationssieb erfolgen. Zum Sieben kommen meist gängigen Siebgewebe aus Edelstahl zum Einsatz. Sichtverfahren für Pulver sind dem Fachmann allgemein bekannt. Das Sichten kann z.B. durch Windsichten erfolgen.

Es können auch zwei oder mehr dieser Klassierungsverfahren hintereinander geschaltet werden, um eine möglichst genaue Einstellung der Partikelgrößenverteilung zu erzielen. Beispielsweise können zunächst eine oder mehrere Siebungen und anschließend eine oder mehrere Sichtungen durchgeführt werden. Dabei könen die Pulver weitestgehend von Partikeln befreit werden, die einen Partikeldurchmesser von weniger als 10 $\mu$m (also $d_2 \geq 10\ \mu$m) und mehr als 200 $\mu$m (also $d_{90} \leq 200\ \mu$m) aufweisen.

Im Anschluss an das Sichten kann die Lawinenenergie ($E_{Law}$) mittels Rotations-Pulver-Analyse und der $d_{50}$-Wert mittels Laserbeugungsanalyse bestimmt werden. Die Beschreibung der hierfür verwendbaren Messmethoden erfolgt nachstehend.

Aus den ermittelten Werten kann dann der Quotienten Q aus Lawinenenergie ($E_{Law}$) und dem mittleren Partikeldurchmesser dso bestimmt werden (Q = $E_{Law}/d_{50}$)

In Schritt e) können dann die Pulver ausgewählt werden, die einen Quotienten Q von nicht mehr als 0,80 kJ/(kg*$\mu$m), aufweisen. In einer bevorzugten Ausführung beträgt Q 0,65 kJ*$\mu$m/kg oder weniger, insbesondere 0,5 kJ*$\mu$m/kg oder weniger. Wenn das Pulver den erforderlichen Wert nicht erfüllt, kann es entweder weiterbehandelt werden, um den Wert für $E_{Law}/d_{50}$ zu erfüllen oder dieses Pulver kann verworfen, bzw. recycelt werden.

Der Quotient Q ist ein Maß für die Fließfähigkeit eines Pulvers. Wie die Fließfähigkeit eines Pulvers nach dem Herstellungsprozess weiter beeinflusst werden kann, ist dem Fachmann grundsätzlich bekannt. Die Fließfähigkeit eines Pulvers kann beispielsweise bei der Pulverherstellung, durch Nachbehandlung oder durch eine Kombination von beiden beeinflusst werden. Bei der Herstellung begünstigen sphärische Partikel eine bessere Fließfähigkeit. Die Fließfähigkeit kann beispielsweise durch Einstellen des Feuchtigkeitsgehalts des Pulvers variiert werden. Außerdem ist es möglich, die Fließfähigkeit nach der Herstellung des Pulvers durch Veränderung der Partikeloberfläche zu modifizieren, beispielsweise durch Temperaturbehandlung oder Mahlen. In einer möglichen Ausführung kann durch die genannten Maßnahmen die Fließfähigkeit derjenigen Pulver variiert werden, die die Bedingungen für Q nicht erfüllen.

Weiterhin betrifft die vorliegende Erfindung ein Verfahren zur Herstellung eines Bauteils mittels additiver Fertigung, umfassend die Schritte:

a) Bereitstellen eines Pulvers aufweisend einen $d_2$- Wert von 10 $\mu$m oder mehr, einen $d_{90}$ - Wert von 200 $\mu$m oder weniger und einen Quotienten $E_{Law}/d_{50}$ von nicht mehr als 0,80 kJ/(kg*$\mu$m), und

b) Additives Fertigen des Bauteils unter Verwendung des Pulvers aus Schritt a) .

Das in Schritt a) bereitgestellte Pulver wird in Schritt b) zum additiven Fertigen eines Bauteils verwendet. Im Rahmen der vorliegenden Erfindung sind unter additiven Fertigungsverfahren solche zu verstehen, bei denen mindestens eine Pulverschicht selektiv auf die Sinter- und/oder Schmelztemperatur erhitzt wird. Solche additiven Fertigungsverfahren werden auch Pulverbett-basierte Verfahren genannt. Die erhitzte Schicht kann in eine verfestigte Schicht umgewandelt werden, z.B durch Abkühlen. In einer bevorzugten Ausführungsform werden mindestens zwei verfestigte Schichten übereinander jeweils aus einem Pulverbett (d.h. einer Pulverschicht) erzeugt. Solche additiven Fertigungsverfahren sind dem Fachmann prinzipiell bekannt.

Selektives Lasersintern (SLS), selektives Laserschmelzen (SLM) und selektives Elektronenstrahlschmelzen (EBM) können beispielhaft genannt werden. In einer bevorzugten Ausführungsform ist es möglich, das additive Fertigungsverfahren mit zerspanenden Verfahren zu kombinieren.

Der bevorzugte Ablauf des additiven Fertigens gemäß Schritt b) des erfindungsgemäßen Verfahrens kann die folgenden Unterschritte aufweisen:

b1)     Aufbringen einer Schicht des erfindungsgemäßen Pulvers, z.B. auf einer Bauplatte,

b2)     zumindest teilweise Erhitzen des Pulvers der ersten Schicht auf die Sinter - und/oder Schmelztemperatur mittels Laser- oder Elektronenstrahlung und anschließendes Abkühlen des erhitzten Pulvers.

Optional umfasst das Verfahren weiterhin die Schritte:

b3)     Aufbringen einer weiteren Schicht eines erfindungsgemäßen Pulvers auf der zuvor erzeugten Schicht,

b4)     zumindest teilweise Erhitzen des Pulvers der weiteren Schicht auf die Sinter - und/oder Schmelztemperatur mit Laser- oder Elektronenstrahlung und anschließendes Abkühlen des erhitzten Pulvers.

Analog zu den Schritten b3) und b4) können anschließend an b4) beliebig viele weitere Schichten aufeinander aufgetragen werden bis das fertige Bauteil erhalten wird.

Optional können zwischen den Schritten b1) - b4) jeweils weitere Schritte ablaufen, solange die Schrittfolge eingehalten wird.

In Schritt b1) wird eine erste Schicht des erfindungsgemäßen Pulvers auf einer Bauplatte aufgebracht. Vorzugsweise ist die Bauplatte eben und weist eine hohe Wärmeleitfähigkeit auf. Bevorzugt ist die Bauplatte aus Metall. Das Aufbringen der Pulverschicht kann bevorzugt mittels Rakeln erfolgen. Das Aufbringen der ersten Schicht geschieht bevorzugt in einem geschlossenen Bauraum. Optional wird der Bauraum vor Schritt b1) evakuiert oder mit einem inerten Gas (z.B. Stickstoff oder einem Edelgas) befüllt.

In Schritt b2) wird das Pulver der ersten Schicht durch Laser- oder Elektronenstrahlung zumindest teilweise, auf die Sinter- und/oder Schmelztemperatur erhitzt. Das Erhitzen erfolgt derart, dass die Sintertemperatur bzw. die Schmelztemperatur der Partikel des Pulvers überschritten wird. Unter der Sintertemperatur ist die Temperatur zu verstehen, ab der die Diffusion von Atomen eines Partikels zur Kontaktstelle eines benachbarten Partikels ermöglicht wird, z.B. mittels Oberflächendiffusion entlang der Partikeloberfläche.

Die Steuerung des Bereichs, in welchem die energiereiche Strahlung auf die Schicht des Pulvers einwirkt und dieses erhitzt, wird bevorzugt durch eine Computersteuerung vorgenommen. Dazu können 3D-Modelle des zu fertigenden Bauteils genutzt werden, die in eine Vielzahl von virtuelle Schnitten zerlegt sind. Jeder dieser virtuellen Schnitte durch das 3D - Modell kann dann als Vorlage für den zu erhitzenden Bereich einer aufgetragenen Pulverschicht dienen.

Nach dem Erhitzten erfolgt ein Abkühlen des erhitzten Bereichs unter die Schmelz- bzw. Sintertemperatur. Dabei erstarrt bzw. verfestigt sich die zuvor erhitzte Pulverschicht.

In Schritt b3) wird eine weitere Schicht des erfindungsgemäßen Pulvers auf die zuvor erzeugte Schicht aufgetragen.

In Schritt b4) erfolgt erneut zumindest teilweises Erhitzen des Pulvers der weiteren Schicht auf die Sinter- oder Schmelztemperatur der Pulverpartikel. Durch das Erhitzen der Partikel über die Sinter- oder Schmelztemperatur kann sich das Material eines Partikels sowohl mit dem Material eines benachbarten Partikels derselben Schicht verbinden als auch mit dem Material eines benachbarten Partikels der zuvor erzeugten Schicht.

Wenn das Bauteil fertig gestellt ist, kann nichtgesintertes bzw. nichtgeschmolzenes, loses Pulver entfernt werden. Das Entfernen kann z.B. durch Sandstrahlen oder Absaugen erfolgen.

Optional kann das Bauteil nach dem additiven Verfahren einer Nachbehandlung unterzogen werden, wobei die Nachbehandlung ausgewählt sein kann aus der Gruppe bestehend aus abtragenden Behandlungen (wie z.B. Schleifen, Polieren, Fräsen, Bohren, Ätzen, Laser- oder Plasma-Ablation), auftragenden Behandlungen (wie z.B. Beschichten, Lackieren, Besputtern, Schweißen, Löten), thermischen Behandlungen (z.B. Erhitzen und Abkühlen), elektrischen Behandlungen (Elektroschweißen, Galvanisieren, Errodieren), Druckveränderung (Druckerhöhung, Druckerniedrigung), mechanischer Verformung (Pressen, Walzen, Strecken, Umformen) und beliebigen Kombinationen von mindestens zwei davon.

Durch die Verwendung des erfindungsgemäßen Pulvers in einem additiven Fertigungsverfahren können Bauteile hoher relativer Dichte (d.h. sehr geringer Porosität) hergestellt werden. Eine hohe relative Dichte ist insbesondere wichtig um, mechanisch stabile Bauteile zu erhalten, da Löcher oder Fehlstellen potentielle Bruchstellen sein können. Des Weiteren kann durch thermisch isolierende Gaseinschlüsse auch die Wärmeleitfähigkeit beeinträchtigt sein. Solche isolierenden Bereiche im Material können insbesondere nachteilig sein, wenn eine hohe Wärmeleitfähigkeit des Bauteils erforderlich ist.

Weiterhin kann durch das erfindungsgemäße Verfahren ein Bauteil erhalten werden, das eine relative Dichte von mehr als 90%, bevorzugt mehr als 95% aufweist.

Bei dem hergestellten Bauteil kann es sich beispielsweise um Kühlkörper, Topologie-optimierte Leichtbaukomponenten, Medizinprodukte oder personalisierte Implantate handeln.

Durch Verwendung des erfindungsgemäßen Pulvers können Bauteile, in komplexen oder filigranen Strukturen hergestellt werden. Insbesondere eignet sich das erfindungsgemäße Verfahren dazu, solche Bauteile herzustellen, die auf Grund der komplexen Geometrie nicht über herkömmliche subtraktive Verfahren wie z.B. Fräsen hergestellt werden können.

Messmethoden

Sofern im Text Normen angegeben sind, beziehen sich diese immer auf die am Anmeldetag gültige Fassung.

Partikelgrößenverteilung

Die Partikelgrößenverteilung kann durch Laserbeugung gemäß ISO 13320:2009 mit dem Gerät "Helos BR/R3" (Sympatec GmbH, Deutschland) bestimmt werden. Der Messbereich beträgt dabei in Abhängigkeit von den im Pulver vorliegenden Partikelgrößen entweder 0,9 - 875 $\mu$m.

Für die Dispergierung der Pulverpartikel kann das Trockendispergiersystem RODODS/M (Sympatec GmbH, Deutschland) mit Schwingrinnendosierer VIBRI (mit Venturi-Düse) verwendete werden. Die Probenmenge beträgt dabei 5 g. Die Wellenlänge der verwendeten Laserstrahlung beträgt 632,8 nm. Die Auswertung kann mit Hilfe der Mie-Theorie erfolgen. Die Partikelgrößen werden als Volumenverteilung erhalten, d.h. im Rahmen der vorliegenden Erfindung wird die Partikelgrößenverteilung in Form einer Volumenverteilungssummenkurve bestimmt.

Aus der durch Laserbeugung gemessenen Partikelgrößenverteilung (Volumenverteilung) können, wie in der ISO 9276-2:2014 beschrieben, die $d_2$ -, $d_{50}$ - und $d_{90}$ - Werte berechnet werden.

Lawinenenergie

Um die Lawinenenergie ($E_{Law}$) der erfindungsgemäßen Pulver zu bestimmen, können die Pulver mittels der hier beschriebenen Rotations-Pulver-Analyse charakterisiert werden. Zur Bestimmung der Lawinenenergie kann beispielsweise ein Revolution Powder Analyzer Model Rev2015 (der Firma Mercury Scientific Inc. Newton USA) unter Verwendung der Software *Revolution Version 6.06* eingesetzt werden. Im Rahmen der vorliegenden Erfindung wird zur Messung der Lawinenenergie folgendes Verfahren angewendet:
Über das Schüttgewicht und das Schüttvolumen wird die Schüttdichte des Pulvers bestimmt. Eine zylindrische Messtrommel wird mit 100 ml Pulver gefüllt. Die Messtrommel weist einen Durchmesser von 100 mm und eine Tiefe von 35 mm auf. Die Messtrommel rotiert um die horizontal orientierte Zylinderachse mit einer konstanten Geschwindigkeit von 0,3 Umdrehungen pro Minute. Eine der beiden Stirnflächen des Zylinders, die zusammen das eingefüllte Pulver in der zylindrischen Messtrommel einschließen, ist transparent. Vor Beginn der Messung wird die Messtrommel 60 Sekunden gedreht. Für die eigentliche Messung werden anschließend entlang der Drehachse der Messtrommel mit einer Kamera mit eine Bildrate von 10 Bildern pro Sekunde Aufnahmen von dem Pulver während des Drehens gemacht. Die Kameraparameter werden dabei so gewählt, dass ein möglichst hoher Kontrast an der Pulver-Luft - Grenzfläche erzielt wird. Während der Rotation der Messtrommel wird das Pulver entgegen der Schwerkraft bis zu einer bestimmten Höhe mitgeschleppt, bevor es wieder in den unteren Teil der Trommel zurück fließt. Das Zurückfließen erfolgt meist rutschartig (diskontinuierlich) und wird auch als Lawine bezeichnet. Eine Messung ist beendet, wenn das Abrutschen von 150 Lawinen registriert wurde.

Anschließend werden die Bilder des vermessenen Pulvers mittels digitaler Bildanalyse ausgewertet. Das Bild wird in gleich große Pixel aufgeteilt. Die Fläche und die Zahl der Pixel hängen von der verwendeten Kamer ab. Dunkle Pixel werden dem Pulver zugerechnet und helle Pixel dem Luftvolumen über dem Pulver. Für jedes einzelne Pixel, das dem Pulver zugerechnet wird, wird über das dazugehörige Volumen (Pixelfläche * Trommeltiefe) und die Dichte des Pulvers die Masse des Pixels berechnet.

Außerdem wird in jedem Bild für jedes Pixel der Abstand h zur Grundlinie bestimmt. Die Grundlinie liegt außerhalb des zu vermessenden Pulvers als horizontale Tangente unterhalb des Messtrommeltrommelumfangs.

Mit diesen Angaben lässt sich über die Formel $E_{pot}$pixel$=m*g*h$ die potentielle Energie jedes Pixels berechnen (m= Masse [kg], g = Erdbeschleunigung [m*s$^{-2}$], h = Höhe über der Grundlinie [m]). Aus der Summe aller errechneten $E_{pot}$pixel pro Bild wird die potentielle Energie des gesamten Pulvers zum Zeitpunkt der Aufnahme berechnet ($E_{pot}$Pulv). Durch Division des erhaltenen Wertes $E_{pot}$Pulv durch die Masse des eingesetzten Pulvers wird die spezifische potentielle Energie des Pulvers berechnet $E_{pots}$Pulv. Die spezifische potentielle Energie des Pulvers zum Zeitpunkt eines jeden Bilds wird aufgezeichnet. Wenn das Pulver während der Trommeldrehung mitgeschleppt wird, steigt die potentielle Energie auf einen Maximalwert an und fällt nach dem Abrutschen einer Lawine auf einen Minimalwert ab. Durch dieses periodische Abrutschen der Lawinen schwankt $E_{pots}$Pulv während der Messung innerhalb bestimmter Grenzen.

Zwischen jedem $E_{pots}$Pulv Maximum und dem jeweils darauffolgenden $E_{pots}$Pulv Minimum wird die Differenz berechnet, wodurch die potentielle Energie jeder einzelnen Lawine $E_{Law\_single}$ bestimmt wird. Aus sämtlichen einzeln bestimmten Werten der Lawinenenergie $E_{Law\_single}$ wird der Mittelwert der Lawinenenergie $E_{Law}$ berechnet.

Porosität

Die Porosität ergibt sich gemäß der folgenden Gleichung:

$$\text{Porosität P (in \%)} = (1 - (\rho_{geo} / \rho_{th})) \times 100\%,$$

wobei
$\rho_{geo}$ die geometrische Dichte des Bauteils und $\rho_{th}$ die theoretische Dichte des Bauteils ist.

Die geometrische Dichte kann nach dem Archimedes-Prinzip, beispielsweise mit einer hydrostatischen Waage, ermittelt werden. Die theoretische Dichte des Bauteils entspricht der theoretischen Dichte des Materials, aus dem das Bauteil gebildet ist. Die relative Dichte $D_{rel}$ (in %) ergibt sich aus ($\rho_{geo} / \rho_{th}$) $\times$ 100%.

Ausführungsbeispiele

Pulver aus verschiedenen schmelz- und/oder sinterbaren Materialien wurden durch Siebung klassiert (Tabelle 1). Die Siebung erfolgte mit dem Gerät AS 200, Retsch GmbH, Deutschland. Es wurden Edelstahlsiebe mit 10 $\mu$m, 20 $\mu$m, 45 $\mu$m, 63 $\mu$m und 140 $\mu$m Maschenweite verwendet und es wurde 2 - 5 Minuten lang mit einer Menge von ca. 100 g Pulver bei unterschiedlichen Amplituden gesiebt.

Die $d_2$ -, und $d_{90}$ - Werte der klassierten Pulver wurden bestimmt. Falls die Werte die Bedingungen $d_2$ - Wert $\geq$ 10 $\mu$m und $d_{90}$ - Wert $\leq$ 200 $\mu$m nach dem Sieben nicht erfüllten, wurden weitere Klassierschritte vorgenommen, bis die Partikelgrößenverteilung innerhalb der angegeben Grenzen lag. Wie die Maschenweite der verschiedenen Siebe zu wählen ist, um Partikel außerhalb des definierten Bereichs aus dem Pulver zu entfernen, ist dem Fachmann bekannt.

Wenn die Pulver die genannten Bedingungen $d_2$- Wert $\geq$ 10 $\mu$m und $d_{90}$- Wert $\leq$ 200 $\mu$m erfüllten, wurde zusätzlich der dso-Wert und die Lawinenenergie, der Pulver gemessen und der Quotient ($E_{Law}/d_{50}$) berechnet.

Aus allen vermessenen Pulvern wurde mittels "Selective Laser Melting" (SLM) mit einer Anlage der Firma ConceptLaser GmbH, Deutschland, Modell MLab, jeweils ein Würfel mit einer Kantenlänge von 10 mm hergestellt. Es wurden stets die gleichen Prozessparameter verwendet (Laserleistung: 95 W Lasergeschwindigkeit: 150 mm/s, Linienabstand: 0,09 mm).

Die geometrische Dichte sowie die relative Dichte wurden für die erhaltenen Bauteile wie oben beschrieben bestimmt.

Die Ergebnisse für die Pulver sowie die daraus hergestellten Bauteil sind in der Tabelle 1 zusammengefasst.

**Tabelle 1: Zusammenfassung der charakterisierten Pulver und der daraus hergestellten Körper. Qualität d. gedruckten Teils: gut = relative Dichte >95%,**

| Material | Versuch | $d_{50}$ | $E_{Law} / d_{50}$ | Relative Dichte |
|---|---|---|---|---|
| CuSn8 | 1 | 31 | 0,29 | gut |
| | 2 | 46,53 | 0,13 | gut |
| | 3 | 33,94 | 0,27 | gut |
| | 4 | 46,9 | 0,19 | gut |
| | 5 | 66,87 | 0,07 | gut |
| | 6 | 75,75 | 0,07 | gut |
| | 7 | 24,03 | 0,48 | gut |
| CuSn10 | 8 | 27,18 | 1,23 | schlecht |
| | 9 | 25,3 | 0,56 | gut |
| Ti6AI4V | 10 | 91,81 | 0,27 | gut |
| | 11 | 33,93 | 1,49 | schlecht |
| | 12 | 39 | 0,33 | gut |
| AlSi10Mg | 13 | 25,11 | 0,72 | gut |
| | 14 | 23,85 | 2,55 | schlecht |

EP 3 360 627 B1

(fortgesetzt)

| Material | Versuch | $d_{50}$ | $E_{Law} / d_{50}$ | Relative Dichte |
|---|---|---|---|---|
| AMZ4 (ZrCuAlNb) | 15 | 87 | 0,31 | gut |
| | 16 | 46 | 1,10 | schlecht |
| $Al_2O_3$-Keramik | 19 | 79 | 0,10 | gut |
| | 20 | 4 | 2,40 | schlecht |

Aus Tabelle1 ist abzulesen, dass der mittlere Partikeldurchmesser $d_{50}$ alleine kein Auswahlkriterium für geeignete Partikel darstellt. Dies wird insbesondere durch Vergleich der Partikelgrößen der Versuche 3, 8 und 13 in Tabelle 1 ersichtlich, die keinen Trend bezüglich der Qualität des gefertigten Bauteils erkennen lassen.

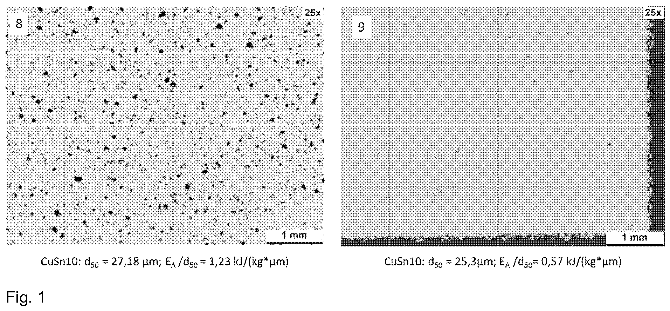

Figur 1 zeigt beispielhaft die lichtmikroskopischen Aufnahmen der gedruckten Bauteile aus den Pulvern 8 und 9. Wie zu erkennen ist, weist das Pulver 9 eine deutlich geringere Porosität auf als das Pulver 8.

**Patentansprüche**

1.  Pulver für ein additives Fertigungsverfahren aufweisend:

    a. einen $d_2$- Wert von 10 $\mu$m oder mehr,
    b. einen $d_{90}$ - Wert von 200 $\mu$m oder weniger und
    c. einen Quotienten $E_{Law}/d_{50} \leq 0,8$ kJ/(kg*$\mu$m), wobei $E_{Law}$ die Lawinenenergie und $d_{50}$ den mittleren Partikeldurchmesser angibt,

    wobei $E_{Law}$ gemäß der Methode in der Beschreibung gemessen wird und die $d_2$-, $d_{50}$ und $d_{90}$-Werte gemäß ISO 13320:2009 in Verbindung mit ISO 9276-2:2014 bestimmt werden und wobei das Pulver mindestens ein Material aufweist, das ausgewählt ist aus der Gruppe bestehend aus Metallen, Keramiken, Gläsern und Glaskeramiken.

2.  Pulver gemäß Anspruch 1, **dadurch gekennzeichnet, dass** das Pulver einen Wert für $E_{Law} /d_{50}$ von 0,65 kJ/(kg*$\mu$m) oder weniger aufweist, insbesondere von 0,5 kJ/(kg*$\mu$m) oder weniger.

3.  Pulver gemäß Anspruch 1 oder 2, **dadurch gekennzeichnet, dass** das Metall ausgewählt ist aus der Gruppe bestehend aus Edelmetallen und Nichtedelmetallen.

4.  Pulver gemäß einem der Ansprüche 1 - 3, **dadurch gekennzeichnet, dass** das Metall eine Legierung ist.

5.  Pulver gemäß einem der Ansprüche 1 - 4, **dadurch gekennzeichnet, dass** die Legierung ausgewählt ist aus der Gruppe bestehend aus Titan-Aluminium-Legierungen, Kupfer-Zinn-Legierungen, Aluminiumlegierungen, Stahllegierungen und Nickelbasislegierungen.

6.  Pulver gemäß Ansprüche 1 - 4, wobei das Metall ein amorphes Metall ist.

7.  Pulver gemäß Anspruch 6, wobei das amorphe Metall ausgewählt ist aus Zirkonbasierten amorphen Metallen, Kupfer-basierten amorphen Metallen und Eisen-basierten amorphen Metallen.

8.  Pulver gemäß einem der Ansprüche 1 - 7, **dadurch gekennzeichnet, dass** mindestens 80% der Partikel der folgenden Bedingung genügen: $0,8 \leq d_{min}/d_{max} \leq 1,0$; wobei $d_{min}$ der minimale Durchmesser und $d_{max}$ der maximale Durchmesser eines Partikels sind.

9.  Verwendung des Pulvers gemäß einem der Ansprüche 1 - 8 in einem Pulverbett-basierten Verfahren zur additiven Fertigung.

10. Verwendung gemäß Anspruch 9, wobei das Verfahren zur additiven Fertigung ausgewählt ist aus selektivem Laserschmelzen, selektivem Lasersintern und Elektronenstrahlschmelzen.

11. Verfahren zur Herstellung eines Bauteils mittels Pulverbett-basierter additiver Fertigung umfassend die Schritte:

a) Bereitstellen eines Pulvers aufweisend einen $d_2$- Wert von 10 $\mu$m oder mehr, einen $d_{90}$ - Wert von 200 $\mu$m oder weniger und einen Quotienten $E_{Law}/d_{50}$ von nicht mehr als 0,80 kJ/(kg*$\mu$m), und

b) Additives Fertigen des Bauteils aus dem Pulver, wobei $E_{Law}$ gemäß der Methode in der Beschreibung gemessen wird und die $d_2$-, $d_{50}$ und $d_{90}$-Werte gemäß ISO 13320:2009 in Verbindung mit ISO 9276-2:2014 bestimmt werden, und wobei das Pulver mindestens ein Material aufweist, das ausgewählt ist aus der Gruppe bestehend aus Metalle, Keramiken, Gläsern und Glaskeramiken.

12. Verfahren nach Anspruch 11, wobei Schritt a) die folgenden Unterschritte aufweist:

a1) Bereitstellen eines Pulvers,

a2) Klassieren des Pulvers, sodass die Partikelgrößenverteilung die Bedingungen $d_2 \geq 10$ $\mu$m und $d_{90} \leq 200$ $\mu$m erfüllt,

a3) Auswahl von Pulvern mit einer Quotienten $E_{Law}/d_{50}$ von nicht mehr als 0,80 kJ/(kg*$\mu$m).

13. Verfahren nach Anspruch 11 oder 12, wobei Schritt b) die folgenden Unterschritte aufweist:

b1) Aufbringen einer Schicht des Pulvers,

b2) Zumindest teilweises Erhitzen des Pulvers auf die Sinter - und/oder Schmelztemperatur mittels Laser- oder Elektronen-Strahlung und anschließendes Abkühlen des erhitzten Pulvers.

**Claims**

1. Powder for an additive manufacturing method, having:

   a. a $d_2$ value of 10 $\mu$m or more,

   b. a $d_{90}$ value of 200 $\mu$m or less, and

   c. a quotient $E_{Law}/d_{50} \leq 0.8$ kJ/(kg*$\mu$m), wherein $E_{Law}$ indicates the avalanche energy and $d_{50}$ indicates the mean particle diameter,

   wherein $E_{Law}$ is measured according to the method in the description, and the $d_2$, $d_{50}$, and $d_{90}$ values are determined in accordance with ISO 13320:2009 in conjunction with ISO 9276-2:2014, and wherein the powder has at least one material that is selected from the group consisting of metals, ceramics, glasses, and glass ceramics.

2. Powder according to claim 1, **characterized in that** the powder has a value for $E_{Law}/d_{50}$ of 0.65 kJ/(kg*$\mu$m) or less, in particular of 0.5 kJ/(kg*$\mu$m) or less.

3. Powder according to claims 1 or 2, **characterized in that** the metal is selected from the group consisting of precious metals and non-precious metals.

4. Powder according to any one of claims 1 - 3, **characterized in that** the metal is an alloy.

5. Powder according to any one of claims 1 - 4, **characterized in that** the alloy is selected from the group consisting of titanium-aluminum alloys, copper-tin alloys, aluminum alloys, steel alloys, and nickel-based alloys.

6. Powder according to any one of claims 1 - 4, wherein the metal is an amorphous metal.

7. Powder according to claim 6, wherein the amorphous metal is selected from zirconium-based amorphous metals, copper-based amorphous metals, and iron-based amorphous metals.

8. Powder according to any one of claims 1 - 7, **characterized in that** at least 80 % of the particles satisfy the following condition: $0.8 \leq d_{min}/d_{max} \leq 1.0$; wherein $d_{min}$ is the minimum diameter and $d_{max}$ is the maximum diameter of a particle.

9. Use of the powder according to any one of claims 1 - 8 in a powder bed-based method for additive manufacturing.

10. Use according to claim 9, wherein the additive manufacturing method is selected from selective laser fusing, selective laser sintering, and electron beam fusing.

**11.** Method for manufacturing a component by means of powder bed-based additive manufacturing, comprising the steps of:

a) providing a powder having a d2 value of 10 $\mu$m or more, a d90 value of 200 $\mu$m or less, and a quotient ELaw/d50 of no more than 0.80 kJ/(kg*$\mu$m), and
b) additive manufacturing of the component from the powder,
wherein $E_{Law}$ is measured according to the method in the description, and the $d_2$, $d_{50}$, and $d_{90}$ values are determined in accordance with ISO 13320:2009 in conjunction with ISO 9276-2:2014, and wherein the powder has at least one material that is selected from the group consisting of metals, ceramics, glasses, and glass ceramics.

**12.** Method according to claim 11, wherein step a) has the following sub-steps:

a1) providing a powder,
a2) sizing the powder such that the particle size distribution satisfies the conditions $d_2 \geq 10\ \mu$m and $d_{90} \leq 200\ \mu$m,
a3) selecting powders having a quotient $E_{Law}/d_{50}$ of no more than 0.80 kJ/(kg*$\mu$m).

**13.** Method according to claims 11 or 12, wherein step b) has the following sub-steps:

b1) applying a layer of the powder,
b2) at least partially heating the powder to the sintering and/or fusing temperature by means of laser or electron radiation, and subsequently cooling the heated powder.

**Revendications**

**1.** Poudre pour un procédé de fabrication additive comprenant :

a. une valeur $d_2$- de 10 $\mu$m ou supérieure,
b. une valeur $d_{90}$- de 200 $\mu$m ou inférieure et
c. un quotient $E_{Law}/d_{50} \leq 0,8$ kJ/(kg*$\mu$m), où $E_{Law}$ est l'énergie d'avalanche et $d_{50}$ est le diamètre moyen de particule,

où $E_{Law}$ est mesurée selon la méthode dans la description et les valeurs $d_2$-, $d_{50}$ et $d_{90}$- sont déterminées selon la norme ISO 13320:2009 conjointement avec la norme ISO 9276-2:2014 et où la poudre comporte au moins une matière, laquelle est choisie dans le groupe constitué par les métaux, les céramiques, les verres et les vitrocéramiques.

**2.** Poudre selon la revendication 1, **caractérisée en ce que** la poudre présente une valeur pour $E_{Law}/d_{50}$) de 0,65 kJ/(kg*$\mu$m) ou inférieure, en particulier de 0,5 kJ/(kg*$\mu$m) ou inférieure.

**3.** Poudre selon la revendication 1 ou 2, **caractérisée en ce que** le métal est choisi dans le groupe constitué par les métaux précieux et les métaux non précieux.

**4.** Poudre selon l'une quelconque des revendications 1 à 3, **caractérisée en ce que** le métal est un alliage.

**5.** Poudre selon l'une quelconque des revendications 1 à 4, **caractérisée en ce que** l'alliage est choisi dans le groupe constitué par les alliages de titane-aluminium, les alliages de cuivre-étain, les alliages d'aluminium, les alliages d'acier et les alliages à base de nickel.

**6.** Poudre selon les revendications 1 à 4, où le métal est un métal amorphe.

**7.** Poudre selon la revendication 6, où le métal amorphe est choisi parmi les métaux amorphes à base de zirconium, les métaux amorphes à base de cuivre et les métaux amorphes à base de fer.

**8.** Poudre selon l'une quelconque des revendications 1 à 7, **caractérisée en ce qu'**au moins 80 % des particules satisfont la condition suivante : $0,8 \leq d_{min}/d_{max} \leq 1,0$ ; où $d_{min}$ est le diamètre minimal et $d_{max}$ est le diamètre maximal d'une particule.

9. Utilisation de la poudre selon l'une quelconque des revendications 1 à 8 dans un procédé à base de lit de poudre pour une fabrication additive.

10. Utilisation selon la revendication 9, où le procédé de fabrication additive est choisi parmi la fusion sélective laser, le frittage sélectif laser et la fusion par faisceau d'électrons.

11. Procédé de fabrication d'un composant au moyen d'une fabrication additive à base de lit de poudre comprenant les étapes suivantes :

a) la fourniture d'une poudre présentant une valeur $d_2$- de 10 $\mu$m ou supérieure, une valeur $d_{90}$-de 200 $\mu$m ou inférieure et un quotient $E_{Law}/d_{50}$ n'étant pas supérieure à 0,80 kJ/(kg*$\mu$m) et
b) la fabrication additive du composant à partir de la poudre,
où $E_{Law}$ est mesurée selon la méthode dans la description et les valeurs $d_2$-, $d_{50}$ et $d_{90}$- étant déterminées selon la norme SO 13320:2009 conjointement avec la norme ISO 9276-2:2014 et où la poudre comporte au moins une matière, laquelle est choisie dans le groupe constitué par les métaux, les céramiques, les verres et les vitrocéramiques.

12. Procédé selon la revendication 11, dans lequel l'étape a) comprend les sous-étapes suivantes :

a1) la fourniture d'une poudre,
a2) la classification de la poudre de telle sorte que la distribution de tailles de particules satisfait les conditions $d_2 \geq 10$ $\mu$m et $d_{90} \leq 200$ $\mu$m,
a3) la sélection de poudres présentant un quotient $E_{Law}/d_{50}$ n'étant pas supérieure à 0,80 kJ/(kg*$\mu$m).

13. Procédé selon la revendication 11 ou 12, où l'étape b) comprend les sous-étapes suivantes :

b1) l'application d'une couche de la poudre,
b2) le chauffage au moins partiel de la poudre à la température de frittage et/ou de fusion au moyen d'un faisceau laser ou des électrons et le refroidissement ultérieur de la poudre chauffée.

CuSn10: $d_{50} = 27,18$ µm; $E_A/d_{50} = 1,23$ kJ/(kg*µm)

CuSn10: $d_{50} = 25,3$µm; $E_A/d_{50} = 0,57$ kJ/(kg*µm)

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **CHOI JOON-PHIL et al.** Densification and microstructural investigation of Inconel 718 parts fabricated by selective laser melting. *Powder Technology,* 2017, vol. 310, 60-66

- **SUN Y Y et al.** Manipulation and Characterization of a Novel Titanium Powder Precursor for Additive Manufacturing Applications. *Journal of Metals,* 2015, vol. 67 (3), 564-572